# EUROPEAN PATENT APPLICATION

(11) **EP 2 738 979 A1**
(43) Date of publication of application: **04.06.2014**
(21) Application number: 11860528.6
(22) Date of filing: 16.08.2011
(51) Int. Cl.: H04L 12/56

(54) **DATA STREAM REUSED TRANSMISSION METHOD, DUPLICATE POINT DEVICE AND SYSTEM**

(71) Applicant: Huawei Technologies Co., Ltd., Shenzhen, Guangdong 518129 (CN)
(72) Inventor: LIU, Hui, Guangdong 518129 (CN); LI, Hejun, Guangdong 518129 (CN)
(74) Representative: Goddar, Heinz J.
(86) International application number: PCT/CN2011/078470
(87) International publication number: WO 2012/119393

(57) **Abstract**

Embodiments of the present invention disclose a method, a duplication point device, a server, and a system for data flow reuse transmission. The method includes: receiving, by a duplication point device, a first data flow request message sent by a first user within a preset time period, receiving a second data flow request message sent by a second user within the preset time period and after receiving the first data flow request message, requesting the first data flow from a server after the current time reaches the end time, receiving the first data flow from the server, duplicating the first data flow, which results in two identical first data flows, and sending one to the first user and the other to the second user respectively. The method, the duplication point device, and the server for data flow reuse transmission provided by one aspect of the present invention does not require running a complicated multicast protocol on a plurality of devices and can achieve simpler and more efficient data flow reuse.

## Description

### TECHNICAL FIELD

The present invention relates to the field of communications technologies, and in particular, to a method, a duplication point device, and a system for data flow reuse transmission.

### BACKGROUND

A video data flow, which is generally a high bandwidth data flow, has a rather great demand for the network bandwidth. Besides, downloading large files also has a rather great demand for the network bandwidth. As the number of types of high bandwidth data flows and the number of users are growing, more network bandwidth resources are consumed, which easily leads to network congestion, thereby reducing data flow delivery quality and impairing user experience.

At present, to optimize network bandwidth resources, the method for flow reuse may be adopted. Data flow reuse refers to sharing of data flow among users who have the same request. When a conventional technology for data flow reuse is used, after receiving the same request from a plurality of users, a server sends content of the data to the users that have the same request in a multicast mode.

During the implementation of the present invention, the inventors find that the prior art has at least the following problem:

When a prior method for data flow reuse is used, a server sends the content of the data to the users that have a need for flow reuse in a multicast mode, which requires running a multicast protocol on a plurality of devices, where the implementation is complicated.

### SUMMARY

One aspect of the present invention provides a method, a duplication point device, and a system for data flow reuse transmission to achieve simpler and more efficient data flow reuse.

One aspect of the present invention adopts the following technical solution.
a duplication point device receives a first data flow request message sent by a first user within a preset time period, where the first data flow request message is used to request a first data flow, and the preset time period is the period of time between start time and end time, where the start time and the end time are included
the duplication point device receives a second data flow request message sent by a second user within the preset time period and after receiving the first data flow request message, where the second data flow request message is used to request the first data flow;
the duplication point device requests the first data flow from a server after the current time reaches the end time;
the duplication point device receives the first data flow from the server;
the duplication point device duplicates the first data flow, which results in two identical first data flows; and
the duplication point device sends one of the two identical first data flows to the first user and sends the other of the two identical first data flows to the second user.

One aspect of the present invention adopts the following technical solution:
a duplication point device receives a first data flow request message sent by a first user within a preset time period, where the first data flow request message is used to request a first data flow, and the preset time period is the period of time between start time and end time, where the start time and the end time are included;
the duplication point device obtains the first data flow from a server according to the first data flow request message;
the duplication point device sends the first data flow to the first user;
the duplication point device duplicates and caches the first data flow;
the duplication point device receives a second data flow request message sent by a second user within the preset time period, where the second data flow request message is used to request the first data flow;
the duplication point device duplicates the existing part of the first data flow, where the existing part is the part of the first data flow received by the duplication point device after the second data flow request message is received;
the duplication point device sends the duplicated existing part to the second user; and
the duplication point device sends to the second user the first data flow cached before receiving the second data flow request message.

One aspect of the present invention adopts the following technical solution:
a duplication point device receives a first data flow request message sent by a first user, where the first data flow request message is used to request a first data flow;
the duplication point device obtains the first data flow from the server according to the first data flow request message;
the duplication point device duplicates the first data flow, which results in two identical first data flows;
the duplication point device sends one of the two identical first data flows to the first user and caches the other of the two identical first data flows, where the cache duration of each bit of the cached data flow is of an identical preset time duration value;
the duplication point device receives a second data flow request message sent by a second user, where the second data flow request message is used to request the first data flow;
the duplication point device duplicates the cached data flow, which results in two identical cached data flows; and
send one of the two identical cached data flows to the second user.

One aspect of the present invention adopts the following technical solution:
a server receives a first data flow request message used to request a first data flow for a first user within a preset time period, where the preset time period is the period of time between start time and end time, where the start time and the end time are included;
the server receives a second data flow request message used to request the first data flow for a second user within the preset time period and after receiving the first data flow request message;
the server sends the first data flow to a duplication point device after the current time reaches the end time;
the duplication point device duplicates the first data flow, which results in two identical first data flows; and
the duplication point device sends one of the two identical first data flows to the first user and sends the other of the two identical first data flows to the second user.

One aspect of the present invention adopts the following technical solution:
a server receives a first data flow request message used to request a first data flow for a first user within a preset time period, where the preset time period is the period of time between start time and end time, where the start time and the end time are included;
the server sends the first data flow to a duplication point device according to the first data flow request message;
the duplication point device sends the first data flow to the first user, and duplicates and caches the first data flow;
the server receives the second data flow request message used to request the first data flow for a second user within the preset time period;
the duplication point device duplicates the existing part of the first data flow after receiving a notification from the server, where the existing part is the part of the first data flow sent to the duplication point device by the server after the second data flow request message is received;
the duplication point device sends the duplicated existing part to the second user; and
the duplication point device sends to the second user the first data flow cached before the server receives the second data flow request message.

One aspect of the present invention adopts the following technical solution:
a server receives a first data flow request message used to request a first data flow for a first user,
the server sends the first data flow to a duplication point device according to the first data flow request message;
the duplication point device duplicates the first data flow, which results in two identical first data flows;
the duplication point device sends one of the two identical first data flows to the first user and caches the other of the two identical first data flows, where the cache duration of each bit of the cached data flow is of an identical preset time duration value;
the server receives a second data flow request message used to request the first data flow for a second user;
the duplication point device duplicates the cached data flow after receiving a notification from the server, which results in two identical cached data flows; and
send one of the two identical cached data flows to the second user.

One aspect of the present invention adopts the following technical solution:
a first receiving unit, configured to receive a first data flow request message sent by a first user within a preset time period, where the first data flow request message is used to request a first data flow, and the preset time period is the period of time between start time and end time, where the start time and the end time are included;
the first receiving unit, further configured to receive a second data flow request message sent by a second user within the preset time period and after receiving the first data flow request message, where the second data flow request message is used to request the first data flow;
a first requesting unit, configured to request the first data flow from a server after the current time reaches the end time;
the first receiving unit, further configured to receive the first data flow from the server;
a first duplicating unit, configured to duplicate the first data flow, which results in two identical first data flows; and
a first sending unit, configured to send one of the two identical first data flows to the first user and send the other of the two identical first data flows to the second user.

One aspect of the present invention adopts the following technical solution:
a second receiving unit, configured to receive a first data flow request message sent by a first user within a preset time period, where the first data flow request message is used to request a first data flow, and the preset time period is the period of time between start time and end time, where the start time and the end time are included;
a first obtaining unit, configured to obtain the first data flow from the server according to the first data flow request message;
a second sending unit, configured to send the first data flow to the first user;
a second duplicating unit, configured to duplicate the first data flow;
a first caching unit, configured to cache the first data flow;
the second receiving unit, further configured to receive a second data flow request message sent by a second user within the preset time period, where the second data flow request message is used to request the first data flow;
the second duplicating unit, further configured to duplicate the existing part of the first data flow, where the existing part is the part of the first data flow received by the duplication point device after the second data flow request message is received;
the second sending unit, further configured to send the duplicated existing part to the second user; and
the second sending unit, further configured to send to the second user the first data flow cached before the second data flow request is received.

One aspect of the present invention adopts the following technical solution:
a third receiving unit, configured to receive a first data flow request message sent by a first user, where the first data flow request message is used to request a first data flow;
a second obtaining unit, configured to obtain the first data flow from the server according to the first data flow request message;
a third duplicating unit, configured to duplicate the first data flow, which results in two identical first data flows;
a third sending unit, configured to send one of the two identical first data flows to the first user;
a second caching unit, configured to cache the other of the two identical first data flows, where the cache duration of each bit of the cached data flow is of an identical preset time duration value;
the third receiving unit, further configured to receive a second data flow request message sent by a second user, where the second data flow request message is used to request the first data flow;
the third duplicating unit, further configured to duplicate the cached data flow, which results in two identical cached data flows;
the third sending unit, further configured to send one of the two identical cached data flows to the second user; and
the third sending unit, further configured to send the cached first data flow to the second user.

One aspect of the present invention adopts the following technical solution:
a server receives a first data flow request message used to request a first data flow for a first user within a preset time period, where the preset time period is the period of time between start time and end time, where the start time and the end time are included;
the server receives a second data flow request message used to request the first data flow for a second user within the preset time period and after receiving the first data flow request message;
the server sends the first data flow to a duplication point device after the current time reaches the end time;
the duplication point device duplicates the first data flow, which results in two identical first data flows; and
the duplication point device sends one of the two identical first data flows to the first user and sends the other of the two identical first data flows to the second user.

One aspect of the present invention adopts the following technical solution:
a server receives a first data flow request message used to request a first data flow for a first user within a preset time period, where the preset time period is the period of time between start time and end time, where the start time and the end time are included;
the server sends the first data flow to a duplication point device according to the first data flow request message;
the duplication point device sends the first data flow to the first user, and duplicates and caches the first data flow;
the server receives the second data flow request message used to request the first data flow for a second user within the preset time period;
the duplication point device duplicates the existing part of the first data flow after receiving a notification from the server, where the existing part is the part of the first data flow sent to the duplication point device by the server after the second data flow request message is received;
the duplication point device sends the duplicated existing part to the second user; and
the duplication point device sends to the second user the first data flow cached before the server receives the second data flow request message.

One aspect of the present invention adopts the following technical solution:
a server receives a first data flow request message used to request a first data flow for a first user;
the server sends the first data flow to a duplication point device according to the first data flow request message;
the duplication point device duplicates the first data flow, which results in two identical first data flows;
the duplication point device sends one of the two identical first data flows to the first user and caches the other of the two identical first data flows, where the cache duration of each bit of the cached data flow is of an identical preset time duration value;
the server receives a second data flow request message used to request the first data flow for a second user;
the duplication point device duplicates the cached data flow after receiving a notification from the server, which results in two identical cached data flows; and
send one of the two identical cached data flows to the second user.

Compared with the prior art, the method, the duplication point device, and the system for data flow reuse transmission provided by one aspect of the present invention does not require running a complicated multicast protocol on a plurality of devices and can achieve simpler and more efficient data flow reuse.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG 1 is a flowchart of a method according to Embodiment 1 of the present invention;
FIG 2 is a flowchart of a method according to Embodiment 2 of the present invention;
FIG. 3 is a flowchart of a method according to Embodiment 3 of the present invention;
FIG 4 is a flowchart of a method according to Embodiment 4 of the present invention;
FIG. 5 is a flowchart of a method according to Embodiment 5 of the present invention;
FIG. 6 is a flowchart of a method according to Embodiment 6 of the present invention;
FIG. 7 is a flowchart of a method according to Embodiment 7 of the present invention;
FIG. 8 is a flowchart of a method according to Embodiment 8 of the present invention;
FIG 9 is a flowchart of a method according to Embodiment 9 of the present invention;
FIG 10 is a flowchart of a method according to Embodiment 10 of the present invention;
FIG 11 is a flowchart of a method according to Embodiment 11 of the present invention;
FIG 12 is a flowchart of a method according to Embodiment 12 of the present invention;
FIG. 13 is a flowchart of a method according to Embodiment 13 of the present invention;
FIG. 14 is a flowchart of a method according to Embodiment 14 of the present invention;
FIG. 15 is a flowchart of a method according to Embodiment 15 of the present invention;
FIG 16 is a flowchart of a method according to Embodiment 16 of the present invention;
FIG 17 is a flowchart of a method according to Embodiment 17 of the present invention;
FIG 18 is a flowchart of a method according to Embodiment 18 of the present invention;
FIG 19 is a schematic structural diagram of a duplication point device according to Embodiment 19 of the present invention;
FIG. 20 is a schematic structural diagram of a duplication point device according to Embodiment 19 of the present invention;
FIG 21 is a schematic structural diagram of a duplication point device according to Embodiment 20 of the present invention;
FIG. 22 is a schematic structural diagram of a duplication point device according to Embodiment 20 of the present invention;
FIG 23 is a schematic structural diagram of a duplication point device according to Embodiment 21 of the present invention;
FIG. 24 is a schematic structural diagram of a duplication point device according to Embodiment 21 of the present invention;
FIG. 25 is a schematic structural diagram of a system according to Embodiment 22 of the present invention;
FIG 26 is a schematic structural diagram of a system according to Embodiment 23 of the present invention; and
FIG 27 is a schematic structural diagram of a system according to Embodiment 24 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

To make the technical solutions of the present invention more apparent, the following gives detailed description of the present invention with reference to the accompanying drawings and the embodiments.

### Embodiment 1

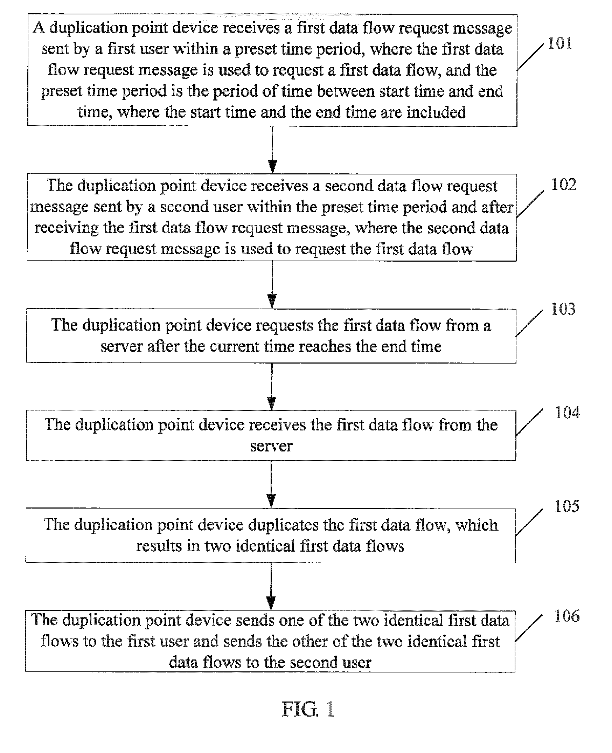

This embodiment provides a method for data flow reuse transmission. As shown in FIG 1, the method includes:
101. A duplication point device receives a first data flow request message sent by a first user within a preset time period, where the first data flow request message is used to request a first data flow, and the preset time period is the period of time between start time and end time, where the start time and the end time are included.
102. The duplication point device receives a second data flow request message sent by a second user within the preset time period and after receiving the first data flow request message, where the second data flow request message is used to request the first data flow.
103. The duplication point device requests the first data flow from a server after the current time reaches the end time.
104. The duplication point device receives the first data flow from the server.
105. The duplication point device duplicates the first data flow, which results in two identical first data flows.
106. The duplication point device sends one of the two identical first data flows to the first user and sends the other of the two identical first data flows to the second user.

Compared with the prior art, the method for data flow reuse transmission provided by one aspect of the present invention does not require running a complicated multicast protocol on a plurality of devices and can achieve simpler and more efficient data flow reuse.

### Embodiment 2

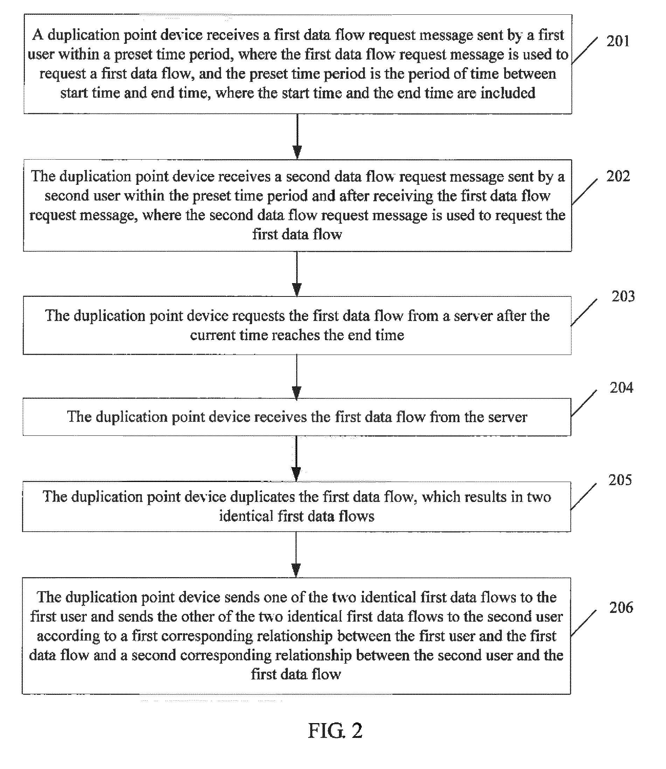

This embodiment provides a method for data flow reuse transmission. As shown in FIG. 2, the method is as follows:
201. A duplication point device receives a first data flow request message sent by a first user within a preset time period, where the first data flow request message is used to request a first data flow, and the preset time period is the period of time between start time and end time, where the start time and the end time are included.
202. The duplication point device receives a second data flow request message sent by a second user within the preset time period and after receiving the first data flow request message, where the second data flow request message is used to request the first data flow.
203. The duplication point device requests the first data flow from a server after the current time reaches the end time.
204. The duplication point device receives the first data flow from the server.
205. The duplication point device duplicates the first data flow, which results in two identical first data flows.
206. The duplication point device sends one of the two identical first data flows to the first user and sends the other of the two identical first data flows to the second user according to a first corresponding relationship between the first user and the first data flow and a second corresponding relationship between the second user and the first data flow.

Preferably, the first corresponding relationship and the second corresponding relationship are respectively established by the duplication point device according to the received first data flow request message and the received second data flow request message. The first corresponding relationship and the second corresponding relationship may be stored in a corresponding relationship table.

### Embodiment 3

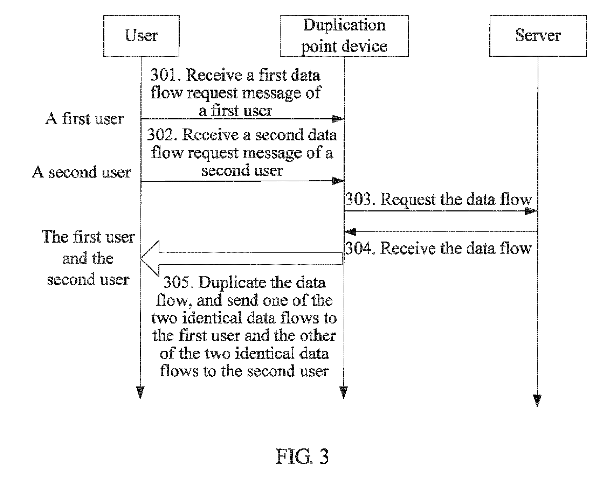

As shown in FIG. 3, another method embodiment is as follows:
301. A duplication point device receives a first data flow request message of a first user within a preset time period, where the preset time period is the period of time between start time and end time, where the start time and the end time are included.
302. The duplication point device receives a second data flow request message of a second user within the preset time period and after receiving the first data flow request message of the first user, where the second data flow request message from the second user is used to request the identical data flow.
303. The duplication point device requests the data flow from a server after the current time reaches the end time.
304. The duplication point device receives the data flow from the server. The duplication point device duplicates the data flow, which results in two identical data flows.
305. The duplication point device sends one of the two identical data flows to the first user and the other of the two identical data flows to the second user according to a first corresponding relationship between the first user and the data flow and a second corresponding relationship between the second user and the data flow, where, the first corresponding relationship and the second corresponding relationship are preestablished, which, preferably, may be respectively established by the duplication point device according to the first data flow request message of the first user and the second data flow request message of the second user.

Compared with the prior art, the method for data flow reuse transmission provided by one aspect of the present invention does not require running a complicated multicast protocol on a plurality of devices and can achieve simpler and more efficient data flow reuse.

### Embodiment 4

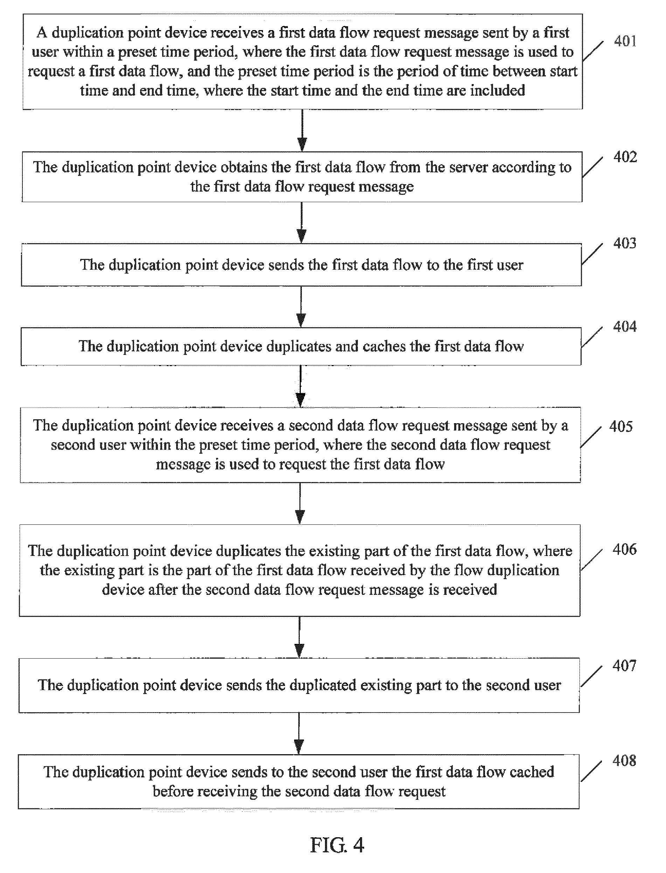

This embodiment provides a method for data flow reuse transmission. As shown in FIG. 4, the method includes:
401. A duplication point device receives a first data flow request message sent by a first user within a preset time period, where the first data flow request message is used to request a first data flow, and the preset time period is the period of time between start time and end time, where the start time and the end time are included.
402. The duplication point device obtains the first data flow from the server according to the first data flow request message.
403. The duplication point device sends the first data flow to the first user.
404. The duplication point device duplicates and caches the first data flow.
Preferably, 403 and 404 are not limited to any sequence. Either 403 or 404 may be performed first, or both 403 and 404 may be performed simultaneously.
405. The duplication point device receives a second data flow request message sent by a second user within the preset time period, where the second data flow request message is used to request the first data flow.
406. The duplication point device duplicates the existing part of the first data flow, where the existing part is the part of the first data flow received by the duplication point device after the second data flow request message is received.
407. The duplication point device sends the duplicated existing part to the second user.
408. The duplication point device sends to the second user the first data flow cached before receiving the second data flow request.

Compared with the prior art, the method for data flow reuse transmission provided by one aspect of the present invention does not require running a complicated multicast protocol on a plurality of devices and can achieve simpler and more efficient data flow reuse.

### Embodiment 5

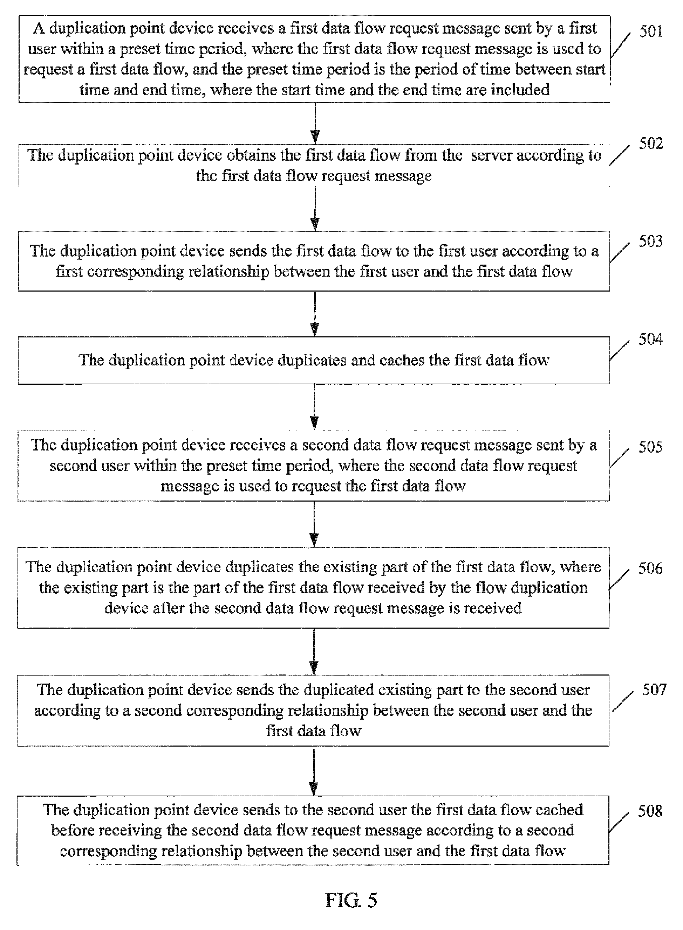

This embodiment provides a method for data flow reuse. As shown in FIG 5, the method includes:
501. A duplication point device receives a first data flow request message sent by a first user within a preset time period, where the first data flow request message is used to request a first data flow, and the preset time period is the period of time between start time and end time, where the start time and the end time are included.
502. The duplication point device obtains the first data flow from the server according to the first data flow request message.
503. The duplication point device sends the first data flow to the first user according to a first corresponding relationship between the first user and the first data flow.
504. The duplication point device duplicates and caches the first data flow.
Preferably, 503 and 504 are not limited to any sequence. Either 503 or 504 may be performed first, or both 503 and 504 may be performed simultaneously.
505. The duplication point device receives a second data flow request message sent by a second user within the preset time period, where the second data flow request message is used to request the first data flow.
506. The duplication point device duplicates the existing part of the first data flow, where the existing part is the part of the first data flow received by the duplication point device after the second data flow request message is received.
507. The duplication point device sends the duplicated existing part to the second user according to a second corresponding relationship between the second user and the first data flow.
508. The duplication point device sends to the second user the first data flow cached before receiving the second data flow request message according to a second corresponding relationship between the second user and the first data flow.

Preferably, 507 and 508 are not limited to any sequence.

Preferably, the first corresponding relationship and the second corresponding relationship are respectively established by the duplication point device according to the received first data flow request message and the received second data flow request message. The first corresponding relationship and the second corresponding relationship may be stored in a corresponding relationship table.

### Embodiment 6

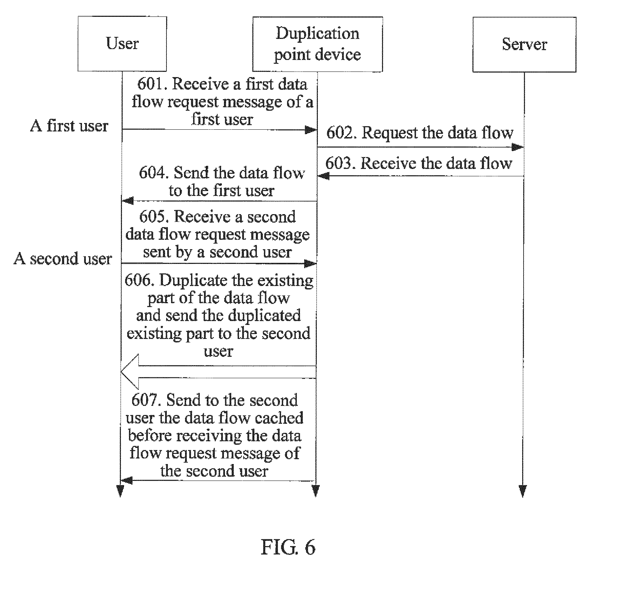

As shown in FIG. 6, another method embodiment is as follows:
601. A duplication point device receives a first data flow request message of a first user within a preset time period, where the preset time period is the period of time between start time and end time, where the start time and the end time are included.
602. The duplication point device requests a data flow from a server according to the first data flow request message of the first user.
603. The duplication point device receives the data flow sent by the server.
604. The duplication point device sends the data flow to the first user, and duplicates and caches the data flow according to a first corresponding relationship between the first user and the data flow.
605. Receive a second data flow request message sent by a second user within the preset time period, where the second data flow request message requests the identical data flow.
606. The duplication point device duplicates the existing part of the data flow, where the existing part is the part of the data flow received by the duplication point device after the second data flow request message is received.
607. The duplication point device sends the duplicated existing part to the second user according to a second corresponding relationship between the second user and the data flow and sends to the second user the data flow cached before receiving the data flow request message from the second user.

Preferably, the first corresponding relationship and the second corresponding relationship are respectively established by the duplication point device according to the received first data flow request message and the received second data flow request message. The first corresponding relationship and the second corresponding relationship may be stored in a corresponding relationship table.

Compared with the prior art, the method for data flow reuse transmission provided by one aspect of the present invention does not require running a complicated multicast protocol on a plurality of devices and can achieve simpler and more efficient data flow reuse.

### Embodiment 7

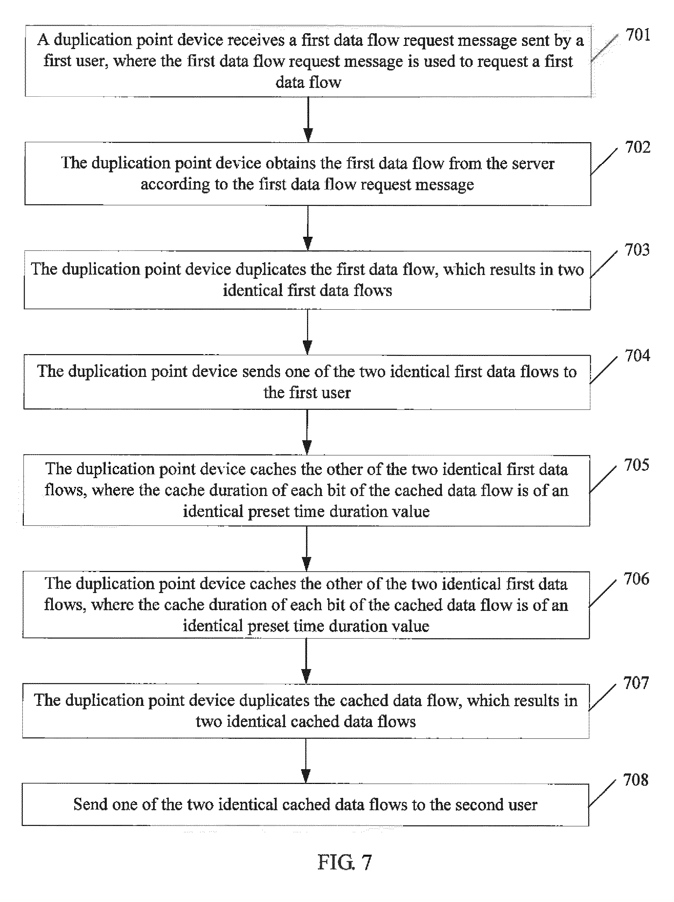

This embodiment provides a method for data flow reuse. As shown in FIG 7, the method includes:
701. A duplication point device receives a first data flow request message sent by a first user, where the first data flow request message is used to request a first data flow.
702. The duplication point device obtains the first data flow from the server according to the first data flow request message.
703. The duplication point device duplicates the first data flow, which results in two identical first data flows.
704. The duplication point device sends one of the two identical first data flows to the first user.
705. The duplication point device caches the other of the two identical first data flows, where the cache duration of each bit of the cached data flow is of an identical preset time duration value.
704 and 705 are not limited to any sequence.
706. The duplication point device receives a second data flow request message sent by a second user, where the second data flow request message is used to request the first data flow.
707. The duplication point device duplicates the cached data flow, which results in two identical cached data flows.
708. Send one of the two identical cached data flows to the second user.

Compared with the prior art, the method for data flow reuse transmission provided by one aspect of the present invention does not require running a complicated multicast protocol on a plurality of devices and can achieve simpler and more efficient data flow reuse.

### Embodiment 8

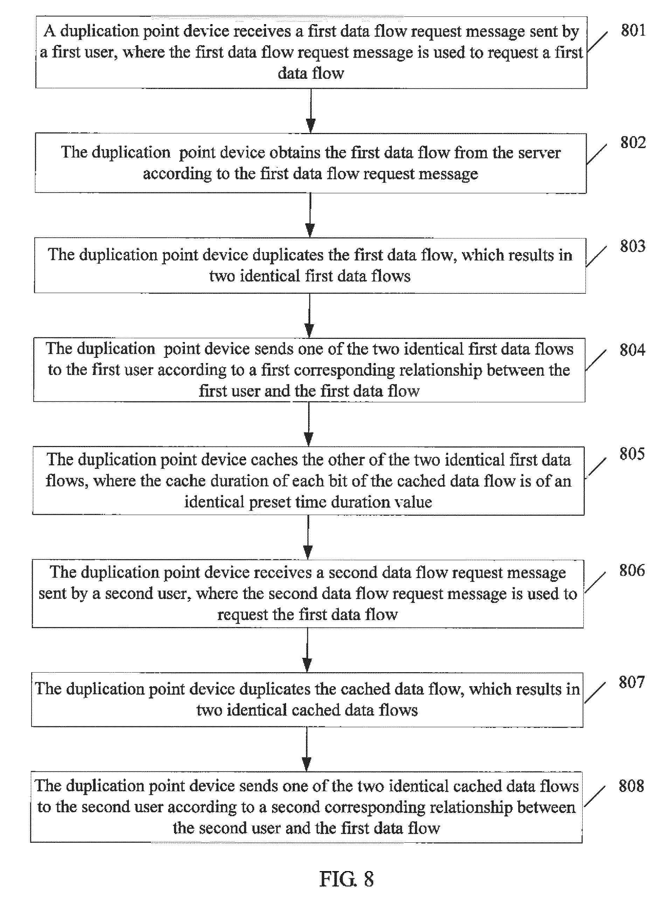

The embodiment of the present invention provides a method for data flow reuse transmission. As shown in FIG. 8, the method includes:
801. A duplication point device receives a first data flow request message sent by a first user, where the first data flow request message is used to request a first data flow.
802. The duplication point device obtains the first data flow from the server according to the first data flow request message.
803. The duplication point device duplicates the first data flow, which results in two identical first data flows.
804. The duplication point device sends one of the two identical first data flows to the first user according to a first corresponding relationship between the first user and the first data flow.
805. The duplication point device caches the other of the two identical first data flows, where the cache duration of each bit of the cached data flow is of an identical preset time duration value.
804 and 805 are not limited to any sequence.
806. The duplication point device receives a second data flow request message sent by a second user, where the second data flow request message is used to request the first data flow.
807. The duplication point device duplicates the cached data flow, which results in two identical cached data flows.
808. The duplication point device sends one of the two identical cached data flows to the second user according to a second corresponding relationship between the second user and the first data flow.

Preferably, the first corresponding relationship and the second corresponding relationship are respectively established by the duplication point device according to the received first data flow request message and the received second data flow request message. The first corresponding relationship and the second corresponding relationship may be stored in a corresponding relationship table.

### Embodiment 9

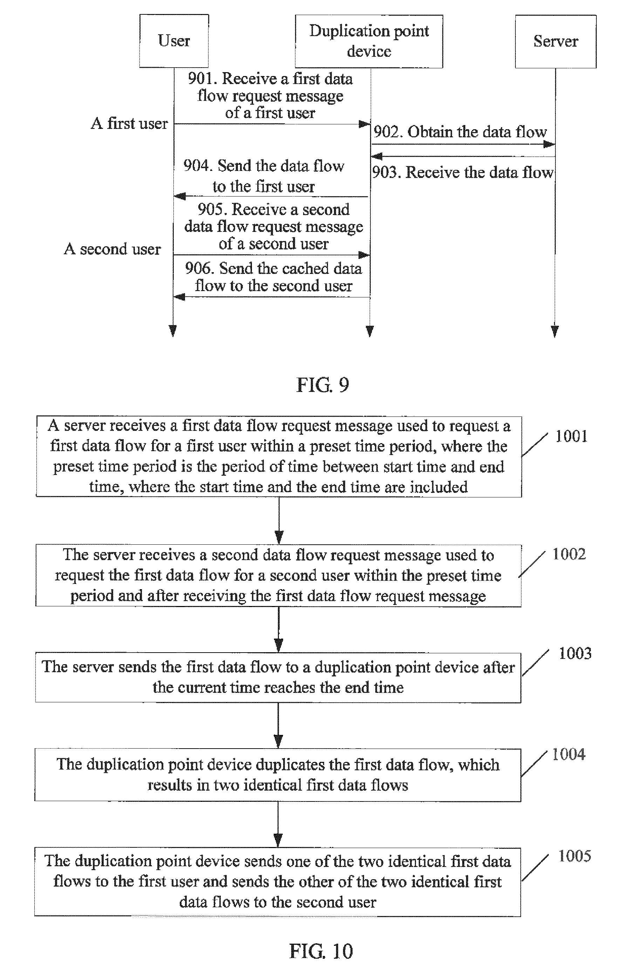

As shown in FIG. 9, another method embodiment is as follows:
901. A duplication point device receives a first data flow request message of a first user.
902. The duplication point device obtains a data flow from a server according to the data flow request message from the first user.
903. The duplication point device receives the data flow sent by the server.
904. The duplication point device duplicates the first data flow, which results in two identical first data flows. The duplication point device sends one of the two identical first data flows to the first user and caches the other of the two identical first data flows, where the cache duration of each bit of the cached data flow is of an identical preset time duration value.
905. The duplication point device receives a second data flow request message of a second user, where the second data flow request message of the second user requests the identical data flow and the second data flow request message of the second user is received under the condition that no bit of the cached data flow in the duplication point device is discarded.
906. The duplication point device sends the cached data flow to the second user according to a first corresponding relationship between the first user and the data flow and a second corresponding relationship between the second user and the data flow.

Compared with the prior art, the method for data flow reuse transmission provided by one aspect of the present invention does not require running a complicated multicast protocol on a plurality of devices and can achieve simpler and more efficient data flow reuse.

### Embodiment 10

This embodiment provides a method for data flow reuse transmission. As shown in FIG. 10, the method includes:
1001. A server receives a first data flow request message used to request a first data flow for a first user within a preset time period, where the preset time period is the period of time between start time and end time, where the start time and the end time are included.
1002. The server receives a second data flow request message used to request the first data flow for a second user within the preset time period and after receiving the first data flow request message.
1003. The server sends the first data flow to a duplication point device after the current time reaches the end time.
1004. The duplication point device duplicates the first data flow, which results in two identical first data flows.
1005. The duplication point device sends one of the two identical first data flows to the first user and sends the other of the two identical first data flows to the second user.

Compared with the prior art, the method for data flow reuse transmission provided by one aspect of the present invention does not require running a complicated multicast protocol on a plurality of devices and can achieve simpler and more efficient data flow reuse.

### Embodiment 11

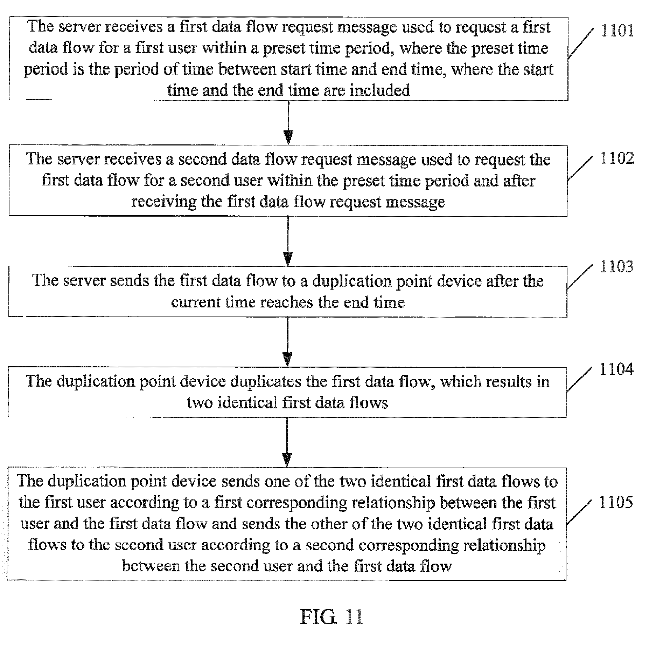

The embodiment of the present invention provides a method for data flow reuse transmission that is applied to a system including a server and a duplication point device. As shown in FIG. 11, the method includes:
1101. The server receives a first data flow request message used to request a first data flow for a first user within a preset time period, where the preset time period is the period of time between start time and end time, where the start time and the end time are included.
Preferably, the first data flow request message is sent by the first user or the duplication point device.
1102. The server receives a second data flow request message used to request the first data flow for a second user within the preset time period and after receiving the first data flow request message.
1103. The server sends the first data flow to a duplication point device after the current time reaches the end time.
1104. The duplication point device duplicates the first data flow, which results in two identical first data flows.
1105. The duplication point device sends one of the two identical first data flows to the first user according to a first corresponding relationship between the first user and the first data flow and sends the other of the two identical first data flows to the second user according to a second corresponding relationship between the second user and the first data flow.

Preferably, the first corresponding relationship and the second corresponding relationship are respectively established by the server or the duplication point device according to the received first data flow request message and the received second data flow request message. The first corresponding relationship and the second corresponding relationship may be stored in a corresponding relationship table.

If the first corresponding relationship and the second corresponding relationship are established by the server, the server needs to send the first corresponding relationship and the second corresponding relationship to the duplication point device.

### Embodiment 12

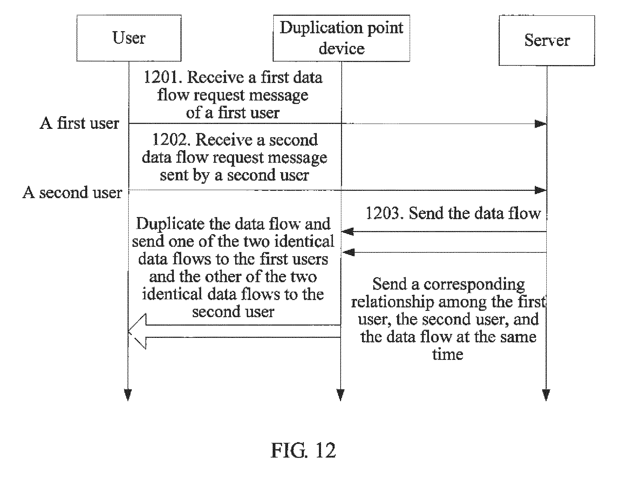

As shown in FIG. 12, another method embodiment is as follows:
1201. A server receives a first data flow request message of a first user within a preset time period, where the preset time period is the period of time between start time and end time, where the start time and the end time are included.
1202. The server receives a second data flow request message sent by a second user within the preset time period and after receiving the first data flow request message of the first user, where the second data flow request message of the second user is used to request the identical data flow.
1203. The server sends to a duplication point device the data flow and a corresponding relationship among the first user, the second user, and the data flow after the current time reaches the end time. The duplication point device duplicates the data flow, which results in the two identical data flows. The duplication point device sends one of the two identical data flows to the first users and the other of the two identical data flows to the second user according to the first corresponding relationship between the first user and the data flow and the second corresponding relationship between the second user and the data flow.

Preferably, the first corresponding relationship and the second corresponding relationship are respectively established by the server according to the received first data flow request message and the received second data flow request message. The first corresponding relationship and the second corresponding relationship may be stored in a corresponding relationship table.

Compared with the prior art, the method for data flow reuse transmission provided by one aspect of the present invention does not require running a complicated multicast protocol on a plurality of devices and can achieve simpler and more efficient data flow reuse.

### Embodiment 13

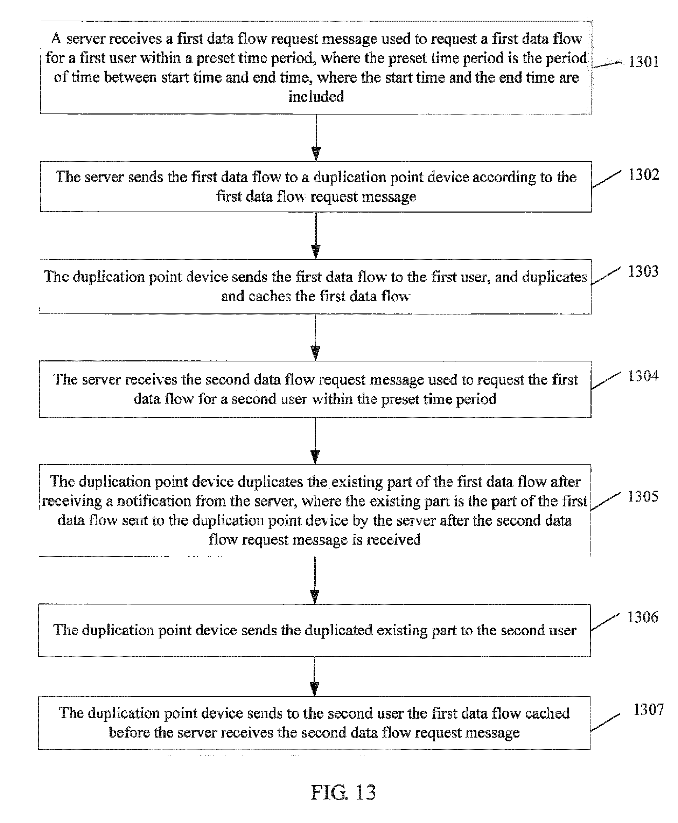

This embodiment provides a method for data flow reuse transmission. As shown in FIG. 13, the method is as follows:
1301. A server receives a first data flow request message used to request a first data flow for a first user within a preset time period, where the preset time period is the period of time between start time and end time, where the start time and the end time are included.
1302. The server sends the first data flow to a duplication point device according to the first data flow request message.
1303. The duplication point device sends the first data flow to the first user, and duplicates and caches the first data flow.
1304. The server receives the second data flow request message used to request the first data flow for a second user within the preset time period.
1305. The duplication point device duplicates the existing part of the first data flow after receiving a notification from the server, where the existing part is the part of the first data flow sent to the duplication point device by the server after the second data flow request message is received.
1306. The duplication point device sends the duplicated existing part to the second user.
1307. The duplication point device sends to the second user the first data flow cached before the server receives the second data flow request message.

Compared with the prior art, the method for data flow reuse transmission provided by one aspect of the present invention does not require running a complicated multicast protocol on a plurality of devices and can achieve simpler and more efficient data flow reuse.

### Embodiment 14

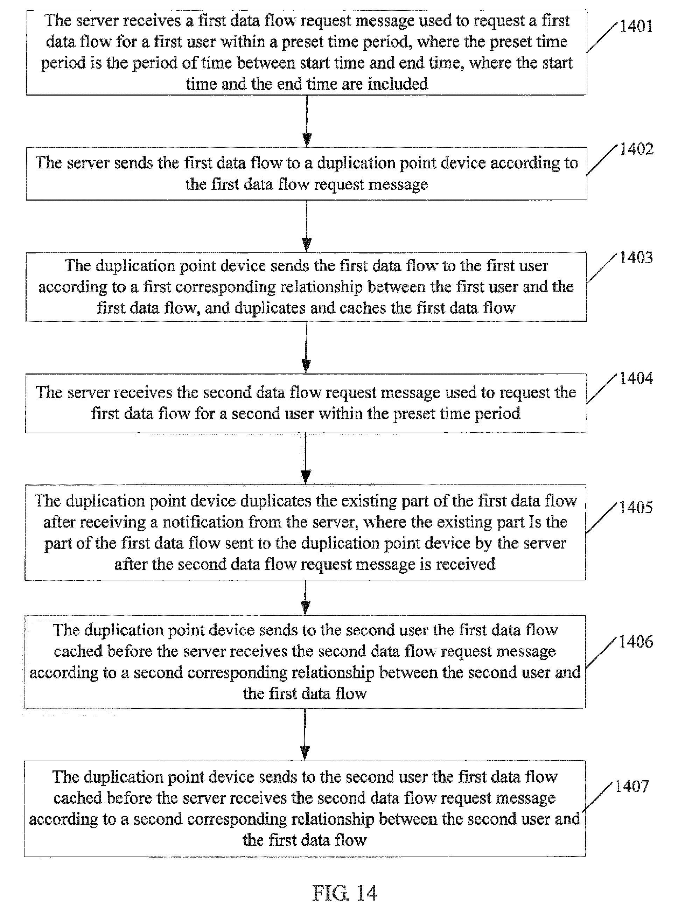

This embodiment provides a method for data flow reuse transmission that is applied to a system including a server and a duplication point device. As shown in FIG. 14, the method includes the following content:
1401. The server receives a first data flow request message used to request a first data flow for a first user within a preset time period, where the preset time period is the period of time between start time and end time, where the start time and the end time are included.
1402. The server sends the first data flow to a duplication point device according to the first data flow request message.
1403. The duplication point device sends the first data flow to the first user according to a first corresponding relationship between the first user and the first data flow, and duplicates and caches the first data flow.
1404. The server receives the second data flow request message used to request the first data flow for a second user within the preset time period.
1405. The duplication point device duplicates the existing part of the first data flow after receiving a notification from the server, where the existing part is the part of the first data flow sent to the duplication point device by the server after the second data flow request message is received.
1406. The duplication point device sends the duplicated existing part to the second user according to a second corresponding relationship between the second user and the first data flow.
1407. The duplication point device sends to the second user the first data flow cached before the server receives the second data flow request message according to a second corresponding relationship between the second user and the first data flow.

Preferably, the first corresponding relationship and the second corresponding relationship are respectively established by the server or the duplication point device according to the received first data flow request message and the received second data flow request message. The first corresponding relationship and the second corresponding relationship may be stored in a corresponding relationship table.

If the first corresponding relationship and the second corresponding relationship are established by the server, the server needs to send the first corresponding relationship and the second corresponding relationship to the duplication point device.

Compared with the prior art, the method for data flow reuse transmission provided by one aspect of the present invention does not require running a complicated multicast protocol on a plurality of devices and can achieve simpler and more efficient data flow reuse.

### Embodiment 15

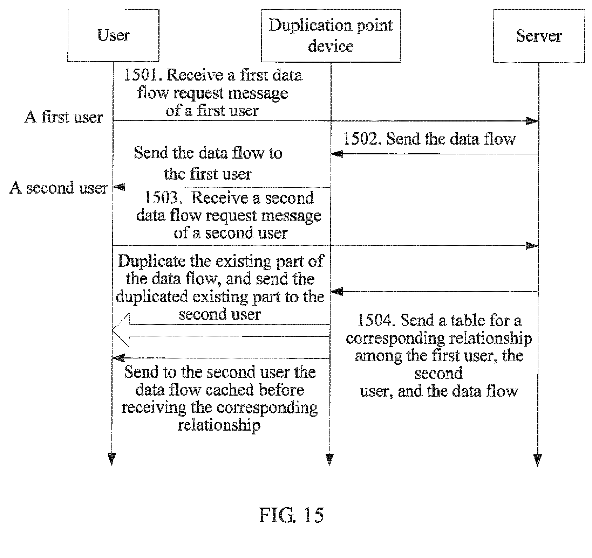

As shown in FIG. 15, another method embodiment is as follows:
1501. A duplication point device receives a first data flow request message of a first user within a preset time period, where the preset time period is the period of time between start time and end time, where the start time and the end time are included.
1502. The server sends a data flow to a duplication point device according to the first data flow request message of the first user. The duplication point device sends the data flow to the first user, and duplicates and caches the data flow.
1503. The server receives a second data flow request message of a second user within the preset time period, where the second data flow request message of the second user is used to request the identical data flow.
1504. The server sends to the duplication point device a corresponding relationship among the first user, the second user and the data flow. The duplication point device duplicates the existing part of the data flow, where the existing part is the part of the data flow sent by the server to the duplication point device after the second data flow request message is received. The duplication point device sends the duplicated existing part to the second user according to the second corresponding relationship between the second user and the data flow and sends to the second user the data flow cached before receiving the corresponding relationship.

Compared with the prior art, the method for data flow reuse transmission provided by one aspect of the present invention does not require running a complicated multicast protocol on a plurality of devices and can achieve simpler and more efficient data flow reuse.

### Embodiment 16

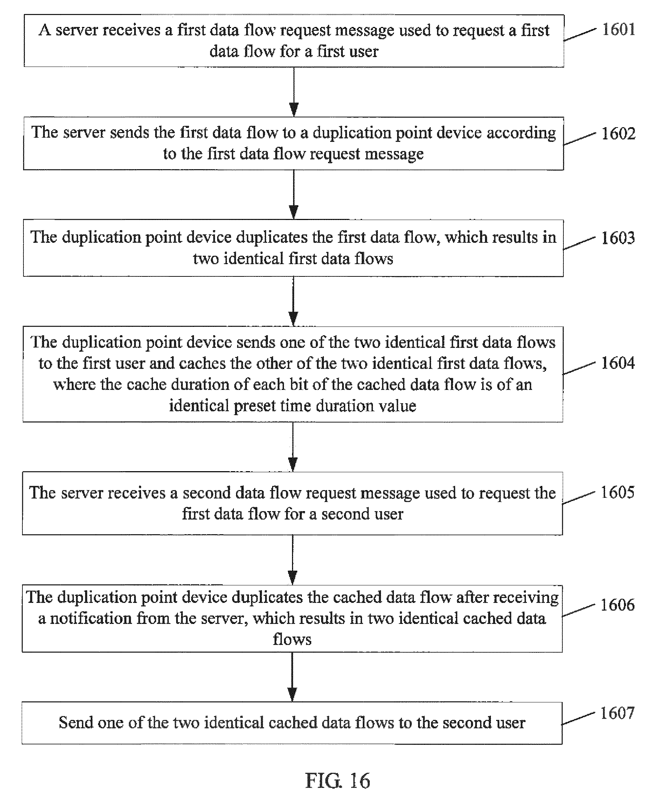

This embodiment provides a method for data flow reuse transmission. As shown in FIG. 16, the method includes the following content:
1601. A server receives a first data flow request message used to request a first data flow for a first user.
1602. The server sends the first data flow to a duplication point device according to the first data flow request message.
1603. The duplication point device duplicates the first data flow, which results in two identical first data flows.
1604. The duplication point device sends one of the two identical first data flows to the first user and caches the other of the two identical first data flows, where the cache duration of each bit of the cached data flow is of an identical preset time duration value.
1605. The server receives a second data flow request message used to request the first data flow for a second user.
1606. The duplication point device duplicates the cached data flow after receiving a notification from the server, which results in two identical cached data flows.
1607. Send one of the two identical cached data flows to the second user.

Compared with the prior art, the method for data flow reuse transmission provided by one aspect of the present invention does not require running a complicated multicast protocol on a plurality of devices and can achieve simpler and more efficient data flow reuse.

### Embodiment 17

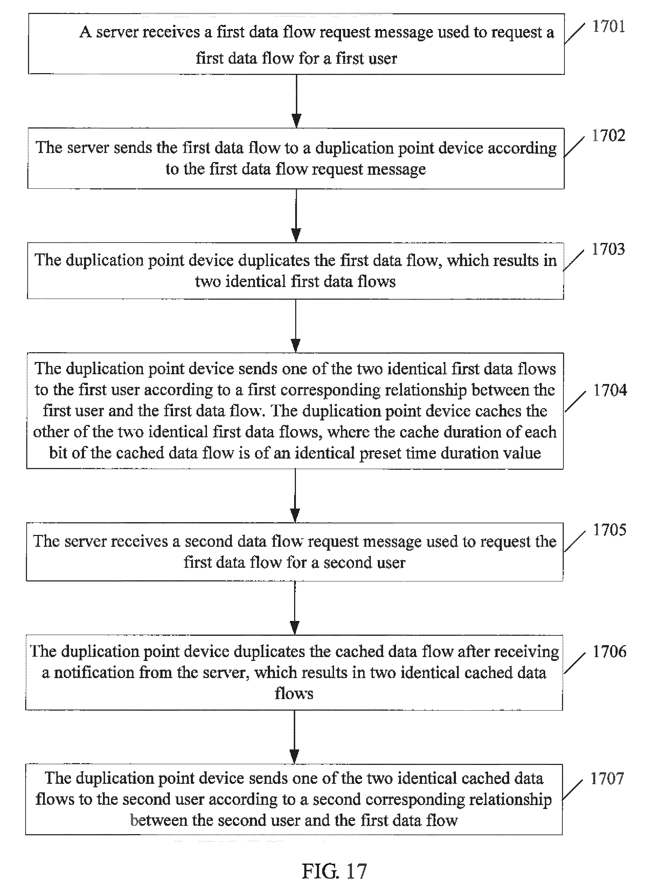

This embodiment provides a method for data flow reuse transmission that is applied to a system including a server and a duplication point device. As shown in FIG 17, the method includes the following content:
1701. A server receives a first data flow request message used to request a first data flow for a first user.
1702. The server sends the first data flow to a duplication point device according to the first data flow request message.
1703. The duplication point device duplicates the first data flow, which results in two identical first data flows.
1704. The duplication point device sends one of the two identical first data flows to the first user according to a first corresponding relationship between the first user and the first data flow. The duplication point device caches the other of the two identical first data flows, where the cache duration of each bit of the cached data flow is of an identical preset time duration value.
1705. The server receives a second data flow request message used to request the first data flow for a second user.
1706. The duplication point device duplicates the cached data flow after receiving a notification from the server, which results in two identical cached data flows.
1707. The duplication point device sends one of the two identical cached data flows to the second user according to a second corresponding relationship between the second user and the first data flow.

Preferably, the first corresponding relationship and the second corresponding relationship are respectively established by the server or the duplication point device according to the received first data flow request message and the received second data flow request message. The first corresponding relationship and the second corresponding relationship may be stored in a corresponding relationship table.

If the first corresponding relationship and the second corresponding relationship are established by the server, the server needs to send the first corresponding relationship and the second corresponding relationship to the duplication point device.

Compared with the prior art, the method for data flow reuse transmission provided by one aspect of the present invention does not require running a complicated multicast protocol on a plurality of devices and can achieve simpler and more efficient data flow reuse.

### Embodiment 18

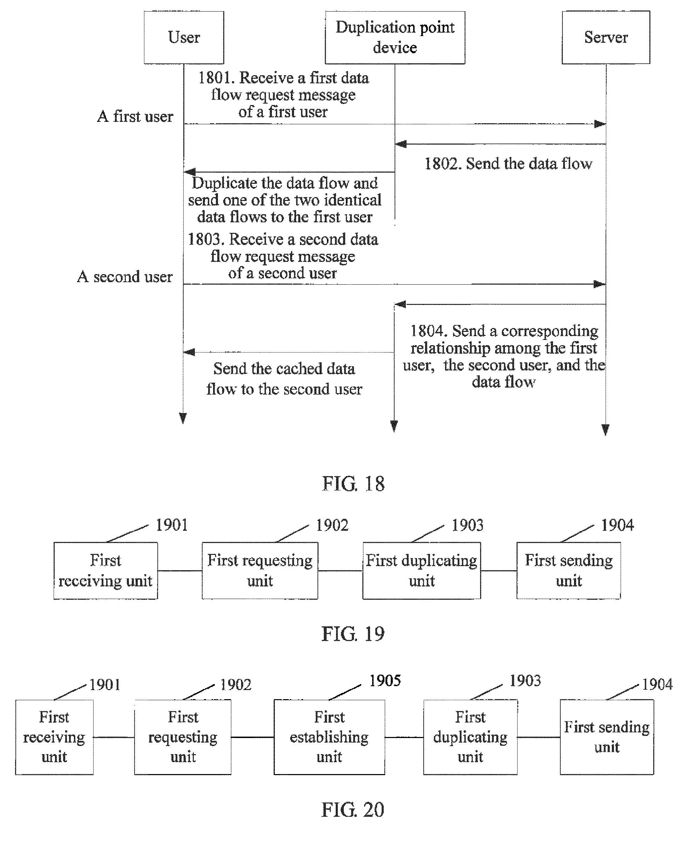

As shown in FIG 18, another method embodiment is as follows:
1801. A server receives a first data flow request message of a first user.
1802. The server sends a data flow to a duplication point device according to the first data flow request message of the first user. The duplication point device duplicates the data flow, which results in two identical data flows. The duplication point device sends one of the two identical data flows to the first user and caches the other of the two identical data flows, where the cache duration of each bit of the cached data flow is of an identical preset time duration value.
1803. The server receives a second data flow request message of a second user, where the second data flow request message of the second user is used to request the identical data flow.
1804. The server sends to the duplication point device a corresponding relationship among the first user, the second user and the data flow. The duplication point device sends the cached data flow to the second user according to the second corresponding relationship between the second user and the data flow.

Compared with the prior art, the method for data flow reuse transmission provided by one aspect of the present invention does not require running a complicated multicast protocol on a plurality of devices and can achieve simpler and more efficient data flow reuse.

### Embodiment 19

This embodiment provides a duplication point device. As shown in FIG 19, the duplication point device includes:
a first receiving unit 1901, configured to receive a first data flow request message sent by a first user within a preset time period, where the first data flow request message is used to request a first data flow, and the preset time period is the period of time between start time and end time, where the start time and the end time are included;
the first receiving unit 1901, further configured to receive a second data flow request message sent by a second user within the preset time period and after receiving the first data flow request message, where the second data flow request message is used to request the first data flow;
a first requesting unit 1902, configured to request the first data flow from a server after the current time reaches the end time;
the first receiving unit 1901, further configured to receive the first data flow from the server;
a first duplicating unit 1903, configured to duplicate the first data flow, which results in two identical first data flows; and
a first sending unit 1904, configured to send one of the two identical first data flows to the first user and send the other of the two identical first data flows to the second user.

Preferably, as shown in FIG. 20, the duplication point device further includes:
a first establishing unit 1905, configured to respectively establish a first corresponding relationship between the first user and the first data flow and a second corresponding relationship between the second user and the first data flow according to the first data flow request message and the second data flow request message.

Further, the first sending unit 1904 is specifically configured to send one of the two identical first data flows to the first user and send the other of the two identical first data flows to the second user according to the first corresponding relationship between the first user and the first data flow and the second corresponding relationship between the second user and the first data flow.

Compared with the prior art, the duplication point device provided by one aspect of the present invention does not require running a complicated multicast protocol on a plurality of devices and can achieve simpler and more efficient data flow reuse.

### Embodiment 20

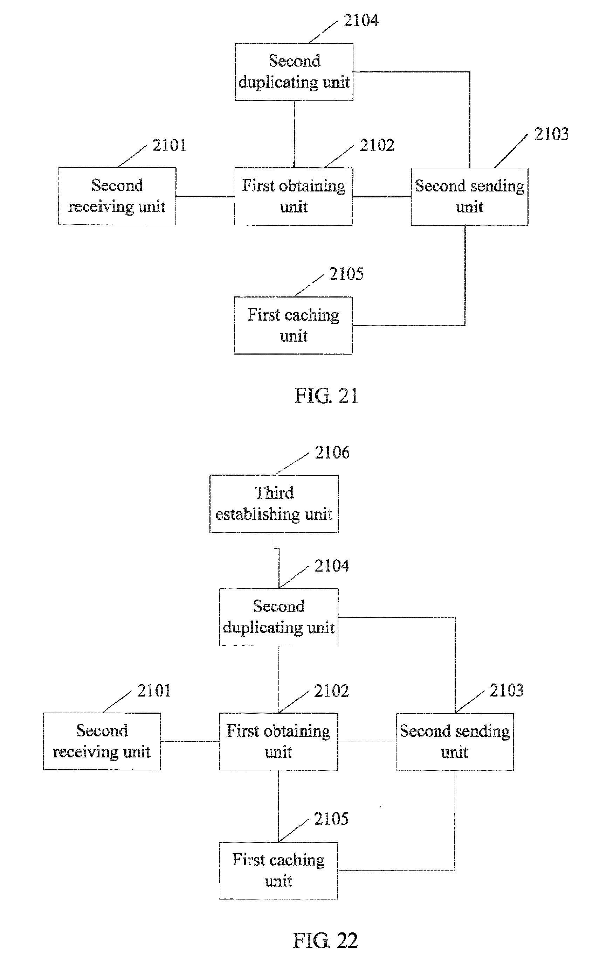

This embodiment provides a duplication point device. As shown in FIG. 21, the duplication point device includes:
a second receiving unit 2101, configured to receive a first data flow request message sent by a first user within a preset time period, where the first data flow request message is used to request a first data flow, and the preset time period is the period of time between start time and end time, where the start time and the end time are included;
a first obtaining unit 2102, configured to obtain the first data flow from the server according to the first data flow request message;
a second sending unit 2103, configured to send the first data flow to the first user;
a second duplicating unit 2104, configured to duplicate the first data flow;
a first caching unit 2105, configured to cache the first data flow;
the second receiving unit 2102, further configured to receive a second data flow request message sent by a second user within the preset time period, where the second data flow request message is used to request the first data flow;
the second duplicating unit 2104, further configured to duplicate the existing part of the first data flow, where the existing part is the part of the first data flow received by the duplication point device after the second data flow request message is received;
the second sending unit 2103, further configured to send the duplicated existing part to the second user; and
the second sending unit 2103, further configured to send to the second user the first data flow cached before the second data flow request is received.

Preferably, as shown in FIG. 22, the duplication point device further includes:
a second establishing unit 2106, configured to respectively establish a first corresponding relationship between the first user and the first data flow and a second corresponding relationship between the second user and the first data flow according to the first data flow request message and the second data flow request message.

Further, the second sending unit 2103 is specifically configured to send the first data flow to the first user according to the first corresponding relationship, send the duplicated existing part to the second user according to the second corresponding relationship between the second user and the first data flow, and send to the second user the first data flow cached before receiving the second data flow request message according to the second corresponding relationship.

Compared with the prior art, the duplication point device provided by one aspect of the present invention does not require running a complicated multicast protocol on a plurality of devices and can achieve simpler and more efficient data flow reuse.

### Embodiment 21

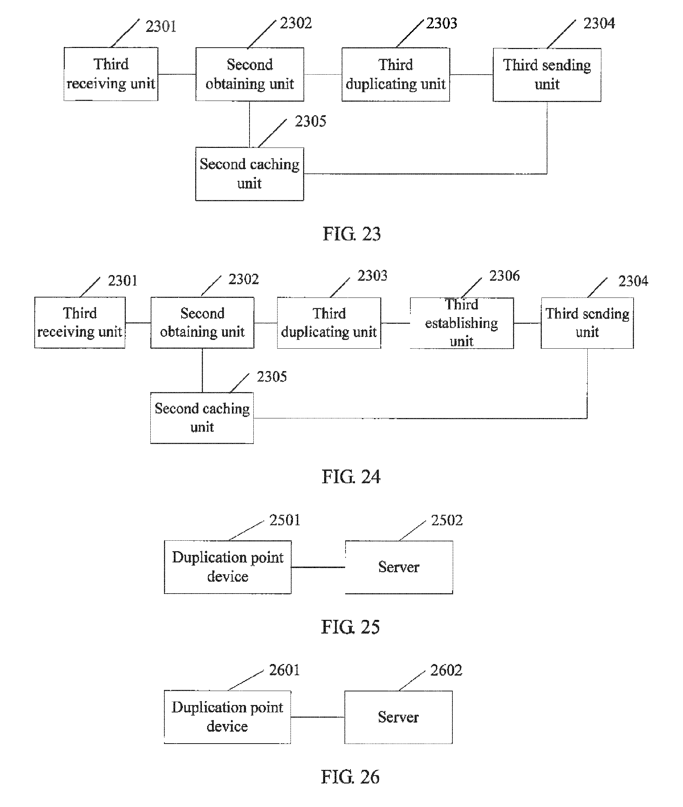

This embodiment provides a duplication point device. As shown in FIG. 23, the duplication point device includes:
a third receiving unit 2301, configured to receive a first data flow request message sent by a first user, where the first data flow request message is used to request a first data flow;
a second obtaining unit 2302, configured to obtain the first data flow from the server according to the first data flow request message;
a third duplicating unit 2303, configured to duplicate the first data flow, which results in two identical first data flows;
a third sending unit 2304, configured to send one of the two identical first data flows to the first user;
a second caching unit 2305, configured to cache the other of the two identical first data flows, where the cache duration of each bit of the cached data flow is of an identical preset time duration value;
the third receiving unit 2301, further configured to receive a second data flow request message sent by a second user, where the second data flow request message is used to request the first data flow;
the third duplicating unit 2303, further configured to duplicate the cached data flow, which results in two identical cached data flows;
the third sending unit 2304, further configured to send one of the two identical cached data flows to the second user; and
the third sending unit 2304, further configured to send the cached first data flow to the second user.

Preferably, as shown in FIG. 24, the duplication point device further includes:
a third establishing unit 2306, configured to respectively establish a first corresponding relationship between the first user and the first data flow and a second corresponding relationship between the second user and the first data flow according to the first data flow request message and the second data flow request message. Further, the third sending unit 2304 is specifically configured to send one of the two identical first data flows to the first user according to the first corresponding relationship and send one of the two identical cached data flows to the second user according to the second corresponding relationship.

Further, the second data flow request message is received under the condition that no bit of the cached data flow in the duplication point device is discarded.

Compared with the prior art, the duplication point device provided by one aspect of the present invention does not require running a complicated multicast protocol on a plurality of devices and can achieve simpler and more efficient data flow reuse.

### Embodiment 22

This embodiment provides a system for data flow reuse transmission. As shown in FIG. 25, the system includes a duplication point device 2510 and a server 2502, where
the server 2502 is configured to receive a first data flow request message used to request a first data flow for a first user within a preset time period, where the preset time period is the period of time between start time and end time, where the start time and the end time are included, receive a second data flow request message used to request the first data flow for a second user within the preset time period and after receiving the first data flow request message, and send the first data flow to the duplication point device after the current time reaches the end time; and
the duplication point device 2501 is configured to duplicate the first data flow, which results in two identical first data flows, and send one of the two identical first data flows to the first user and send the other of the two identical first data flows to the second user.

Preferably, the system further includes:
the duplication point device or the server respectively establishes a first corresponding relationship between the first user and the first data flow and a second corresponding relationship between the second user and the first data flow according to the first data flow request message and the second data flow request message.

Preferably, the duplication point device 2501 is specifically configured to send one of the two identical first data flows to the first user and send the other of the two identical first data flows to the second user according to the first corresponding relationship and the second corresponding relationship.

Compared with the prior art, the system for data flow reuse transmission provided by one aspect of the present invention does not require running a complicated multicast protocol on a plurality of devices and can achieve simpler and more efficient data flow reuse.

### Embodiment 23

This embodiment provides a system for data flow reuse transmission. As shown in FIG. 26, the system includes a duplication point device and a server, where
the server 2602 is configured to receive a first data flow request message used to request a first data flow for a first user within a preset time period, and the preset time period is the period of time between start time and end time, where the start time and the end time are included, and send the first data flow to the duplication point device according to the first data flow request message;
the duplication point device 2601 is configured to send the first data flow to the first user, and duplicates and caches the first data flow;
the server 2602 is further configured to receive the second data flow request message used to request the first data flow for a second user within the preset time period; and
the duplication point device 2601 is further configured to duplicate the existing part of the first data flow after receiving a notification from the server, where the existing part is the part of the first data flow sent to the duplication point device by the server after the second data flow request message is received, send the duplicated existing part to the second user, and send to the second user the first data flow cached before the server receives the second data flow request message.

Preferably, the system further includes:
the duplication point device or the server respectively establishes a first corresponding relationship between the first user and the first data flow and a second corresponding relationship between the second user and the first data flow according to the first data flow request message and the second data flow request message.

Preferably, the duplication point device 2601 is specifically configured to send one of the two identical first data flows to the first user and send the other of the two identical first data flows to the second user according to the first corresponding relationship and the second corresponding relationship.

Compared with the prior art, the system for data flow reuse transmission provided by one aspect of the present invention does not require running a complicated multicast protocol on a plurality of devices and can achieve simpler and more efficient data flow reuse.

### Embodiment 24

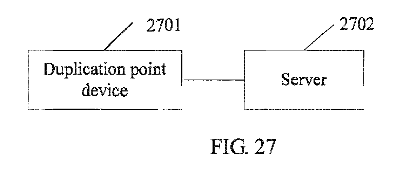

This embodiment provides a system for data flow reuse transmission. As shown in FIG 27, the system includes a duplication point device 2701 and a server 2702, where
the server 2702 is configured to receive a first data flow request message used to request a first data flow for a first user and send the first data flow to the duplication point device according to the first data flow request message;
the duplication point device 2701 is configured to duplicate the first data flow, which results in two identical first data flows, and send one of the two identical first data flows to the first user, and cache the other of the two identical first data flows, where the cache duration of each bit of the cached data flow is of an identical preset time duration value;
the server 2702 is further configured to receive a second data flow request message used to request the first data flow for a second user; and
the duplication point device 2701 is further configured to duplicate the cached data flow after receiving a notification from the server, which results in two identical cached data flows, and send one of the two identical cached data flows to the second user.

Preferably, the system further includes:
the duplication point device or the server respectively establishes a first corresponding relationship between the first user and the first data flow and a second corresponding relationship between the second user and the first data flow according to the first data flow request message and the second data flow request message.

Preferably, the duplication point device 2701 is specifically configured to send one of the two identical first data flows to the first user according to the first corresponding relationship and send one of the two identical cached data flows to the second user according to the second corresponding relationship.

Preferably, the second data flow request message is received under the condition that no bit of the cached data flow in the duplication point device is discarded.

Compared with the prior art, the system for data flow reuse transmission provided by one aspect of the present invention does not require running a complicated multicast protocol on a plurality of devices and can achieve simpler and more efficient data flow reuse.

The duplication point device and the system for data flow reuse transmission provided by one aspect of the present invention can implement the foregoing method embodiments. For detailed description of the function implementation, reference may be made to the description of method embodiments, and details are not described herein again. The method, the duplication point device, and the system for data flow reuse transmission provided by one aspect of the present invention may be applied but not limited to a video service and a large file download service.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed, where, the storage medium may be a magnetic disk, an optical disk, a Read-Only Memory (Read-Only Memory, ROM), or a Random Access Memory (Random Access Memory, RAM).

The foregoing descriptions are merely specific embodiments of the present invention, but are not intended to limit the protection scope of the present invention. Any variation or replacement readily figured out by persons skilled in the art within the technical scope of the present invention shall fall within the protection scope of the present invention. Therefore, the protection scope of the present invention shall be subject to the protection scope of the claims.

## Claims

1. A method for data flow reuse transmission, comprising:
receiving, by a duplication point device, a first data flow request message sent by a first user within a preset time period, wherein the first data flow request message is used to request a first data flow, and the preset time period is the period of time between start time and end time, wherein the start time and the end time are comprised;
receiving, by the duplication point device, a second data flow request message sent by a second user within the preset time period and after receiving the first data flow request message, wherein the second data flow request message is used to request the first data flow;
requesting, by the duplication point device, the first data flow from a server after the current time reaches the end time;
receiving, by the duplication point device, the first data flow from the server;
duplicating, by the duplication point device, the first data flow, which results in two identical first data flows; and
sending, by the duplication point device, one of the two identical first data flows to the first user and sending the other of the two identical first data flows to the second user.

2. The method according to claim 1, further comprising:
establishing, respectively, a first corresponding relationship between the first user and the first data flow and a second corresponding relationship between the second user and the first data flow according to the first data flow request message and the second data flow request message.

3. The method according to claim 2, wherein the sending, by the duplication point device, one of the two identical first data flows to the first user and sending the other of the two identical first data flows to the second user comprises:
sending, by the duplication point device, one of the two identical first data flows to the first user and sending the other of the two identical first data flows to the second user according to the first corresponding relationship between the first user and the first data flow and the second corresponding relationship between the second user and the first data flow.

4. A method for data flow reuse transmission, comprising:
receiving, by a duplication point device, a first data flow request message sent by a first user within a preset time period, wherein the first data flow request message is used to request a first data flow, and the preset time period is the period of time between start time and end time, wherein the start time and the end time are comprised;
obtaining, by the duplication point device, the first data flow from a server according to the first data flow request message;
sending, by the duplication point device, the first data flow to the first user;
duplicating and caching, by the duplication point device, the first data flow;
receiving, by the duplication point device, a second data flow request message sent by a second user within the preset time period, wherein the second data flow request message is used to request the first data flow.
duplicating, by the duplication point device, the existing part of the first data flow, wherein the existing part is the part of the first data flow received by the duplication point device after the second data flow request message is received;
sending, by the duplication point device, the duplicated existing part to the second user; and
sending, by the duplication point device, to the second user the first data flow cached before receiving the second data flow request message;

5. The method according to claim 4, further comprising:
establishing, respectively, a first corresponding relationship between the first user and the first data flow and a second corresponding relationship between the second user and the first data flow according to the first data flow request message and the second data flow request message.

6. The method according to claim 5, wherein
the sending, by the duplication point device, the first data flow to the first user comprises:
sending, by the duplication point device, the first data flow to the first user according to the first corresponding relationship;
the sending, by the duplication point device, the duplicated existing part to the second user comprises:
sending, by the duplication point device, the duplicated existing part to the second user according to the second corresponding relationship between the second user and the first data flow; and
the sending, by the duplication point device, to the second user the first data flow cached before receiving the second data flow request message comprises:
sending, by the duplication point device, to the second user the first data flow cached before receiving the second data flow request message according to the second corresponding relationship.

7. A method for data flow reuse transmission, comprising:
receiving, by a duplication point device, a first data flow request message sent by a first user, wherein the first data flow request message is used to request a first data flow;
obtaining, by the duplication point device, the first data flow from the server according to the first data flow request message;
duplicating, by the duplication point device, the first data flow, which results in two identical first data flows;
sending, by the duplication point device, one of the two identical first data flows to the first user and caching the other of the two identical first data flows, wherein the cache duration of each bit of the cached data flow is of an identical preset time duration value;
receiving, by the duplication point device, a second data flow request message sent by a second user, wherein the second data flow request message is used to request the first data flow;
duplicating, by the duplication point device, the cached data flow, which results in two identical cached data flows; and
sending one of the two identical cached data flows to the second user.

8. The method according to claim 7, further comprising:
establishing, respectively, a first corresponding relationship between the first user and the first data flow and a second corresponding relationship between the second user and the first data flow according to the first data flow request message and the second data flow request message.

9. The method according to claim 8, wherein
the sending, by the duplication point device, one of the two identical first data flows to the first user comprises:
sending, by the duplication point device, one of the two identical first data flows to the first user according to the first corresponding relationship; and
the sending one of the two identical cached data flows to the second user comprises:
sending one of the two identical cached data flows to the second user according to the second corresponding relationship.

10. The method according to any one of claim 7 to claim 9, wherein the second data flow request message is received under the condition that no bit of the cached data flow in the duplication point device is discarded.

11. A method for data flow reuse transmission, comprising:
receiving, by a server, a first data flow request message used to request a first data flow for a first user within a preset time period, wherein the preset time period is the period of time between start time and end time, wherein the start time and the end time are comprised;
receiving, by the server, a second data flow request message used to request the first data flow for a second user within the preset time period and after receiving the first data flow request message;
sending, by the server, the first data flow to a duplication point device after the current time reaches the end time;
duplicating, by the duplication point device, the first data flow, which results in two identical first data flows; and
sending, by the duplication point device, one of the two identical first data flows to the first user and sending the other of the two identical first data flows to the second user.

12. The method according to claim 11, further comprising:
establishing, respectively, by the duplication point device or the server, a first corresponding relationship between the first user and the first data flow and a second corresponding relationship between the second user and the first data flow according to the first data flow request message and the second data flow request message.

13. The method according to claim 12, wherein the sending, by the duplication point device, one of the two identical first data flows to the first user and sending the other of the two identical first data flows to the second user comprises:
sending, by the duplication point device, one of the two identical first data flows to the first user and sending the other of the two identical first data flows to the second user according to the first corresponding relationship and the second corresponding relationship.

14. A method for data flow reuse transmission, comprising:
receiving, by a server, a first data flow request message used to request a first data flow for a first user within a preset time period, wherein the preset time period is the period of time between start time and end time, wherein the start time and the end time are comprised;
sending, by the server, the first data flow to a duplication point device according to the first data flow request message;
sending, by the duplication point device, the first data flow to the first user, and duplicating and caching the first data flow;
receiving, by the server, the second data flow request message used to request the first data flow for a second user within the preset time period;
duplicating, by the duplication point device, the existing part of the first data flow after receiving a notification from the server, wherein the existing part is the part of the first data flow sent to the duplication point device by the server after the second data flow request message is received;
sending, by the duplication point device, the duplicated existing part to the second user; and
sending, by the duplication point device, to the second user the first data flow cached before the server receives the second data flow request message.

15. The method according to claim 14, further comprising:
establishing, respectively, by the duplication point device or the server, a first corresponding relationship between the first user and the first data flow and a second corresponding relationship between the second user and the first data flow according to the first data flow request message and the second data flow request message.

16. The method according to claim 15, wherein
the sending, by the duplication point device, the first data flow to the first user comprises:
sending, by the duplication point device, the first data flow to the first user according to the first corresponding relationship; and
the sending, by the duplication point device, the duplicated existing part to the second user and sending to the second user the first data flow cached before the server receives the second data flow request message comprises:
sending, by the duplication point device, the duplicated existing part to the second user according to the second corresponding relationship, and sending to the second user the first data flow cached before the server receives the second data flow request message according to the second corresponding relationship.

17. A method for data flow reuse transmission, comprising:
receiving, by a server, a first data flow request message used to request a first data flow for a first user;
sending, by the server, the first data flow to a duplication point device according to the first data flow request message;
duplicating, by the duplication point device, the first data flow, which results in two identical first data flows;
sending, by the duplication point device, one of the two identical first data flows to the first user and caching the other of the two identical first data flows, wherein the cache duration of each bit of the cached data flow is of an identical preset time duration value;
receiving, by the server, a second data flow request message used to request the first data flow for a second user;
duplicating, by the duplication point device, the cached data flow after receiving a notification from the server, which results in two identical cached data flows; and
sending one of the two identical cached data flows to the second user.

18. The method according to claim 17, further comprising:
establishing, respectively, by the duplication point device or the server, a first corresponding relationship between the first user and the first data flow and a second corresponding relationship between the second user and the first data flow according to the first data flow request message and the second data flow request message.

19. The method according to claim 18, wherein
the sending, by the duplication point device, one of the two identical first data flows to the first user comprises:
sending, by the duplication point device, one of the two identical first data flows to the first user according to the first corresponding relationship; and
the sending one of the two identical cached data flows to the second user comprises:
sending one of the two identical cached data flows to the second user according to the second corresponding relationship.

20. The method according to any one of claim 17 to claim 19, wherein the second data flow request message is received under the condition that no bit of the cached data flow in the duplication point device is discarded.

21. A duplication point device, comprising:
a first receiving unit, configured to receive a first data flow request message sent by a first user within a preset time period, wherein the first data flow request message is used to request a first data flow, and the preset time period is the period of time between start time and end time, wherein the start time and the end time are comprised;
the first receiving unit, further configured to receive a second data flow request message sent by a second user within the preset time period and after receiving the first data flow request message, wherein the second data flow request message is used to request the first data flow;
a first requesting unit, configured to request the first data flow from a server after the current time reaches the end time;
the first receiving unit, further configured to receive the first data flow from the server;
a first duplicating unit, configured to duplicate the first data flow, which results in two identical first data flows; and
a first sending unit, configured to send one of the two identical first data flows to the first user and sending the other of the two identical first data flows to the second user.

22. The duplication point device according to claim 21, further comprising:
a first establishing unit, configured to respectively establish a first corresponding relationship between the first user and the first data flow and a second corresponding relationship between the second user and the first data flow according to the first data flow request message and the second data flow request message.

23. The duplication point device according to claim 22, wherein the first sending unit is specifically configured to send one of the two identical first data flows to the first user and send the other of the two identical first data flows to the second user according to the first corresponding relationship between the first user and the first data flow and the second corresponding relationship between the second user and the first data flow.

24. A duplication point device, comprising:
a second receiving unit, configured to receive a first data flow request message sent by a first user within a preset time period, wherein the first data flow request message is used to request a first data flow, and the preset time period is the period of time between start time and end time, wherein the start time and the end time are comprised;
a first obtaining unit, configured to obtain the first data flow from the server according to the first data flow request message;
a second sending unit, configured to send the first data flow to the first user;
a second duplicating unit, configured to duplicate the first data flow;
a first caching unit, configured to cache the first data flow;
the second receiving unit, further configured to receive a second data flow request message sent by a second user within the preset time period, wherein the second data flow request message is used to request the first data flow;
the second duplicating unit, further configured to duplicate the existing part of the first data flow, wherein the existing part is the part of the first data flow received by the duplication point device after the second data flow request message is received;
the second sending unit, further configured to send the duplicated existing part to the second user; and
the second sending unit, further configured to send to the second user the first data flow cached before the second data flow request is received.

25. The duplication point device according to claim 24, further comprising:
a second establishing unit, configured to respectively establish a first corresponding relationship between the first user and the first data flow and a second corresponding relationship between the second user and the first data flow according to the first data flow request message and the second data flow request message.

26. The duplication point device according to claim 25, wherein the second sending unit is specifically configured to send the first data flow to the first user according to the first corresponding relationship, send the duplicated existing part to the second user according to the second corresponding relationship between the second user and the first data flow, and send to the second user the first data flow cached before receiving the second data flow request message according to the second corresponding relationship.

27. A duplication point device, comprising:
a third receiving unit, configured to receive a first data flow request message sent by a first user, wherein the first data flow request message is used to request a first data flow;
a second obtaining unit, configured to obtain the first data flow from the server according to the first data flow request message;
a third duplicating unit, configured to duplicate the first data flow, which results in two identical first data flows;
a third sending unit, configured to send one of the two identical first data flows to the first user;
a second caching unit, configured to cache the other of the two identical first data flows, wherein the cache duration of each bit of the cached data flow is of an identical preset time duration value;
the third receiving unit, further configured to receive a second data flow request message sent by a second user, wherein the second data flow request message is used to request the first data flow;
the third duplicating unit, further configured to duplicate the cached data flow, which results in two identical cached data flows;
the third sending unit, further configured to send one of the two identical cached data flows to the second user; and
the third sending unit, further configured to send the cached first data flow to the second user.

28. The duplication point device according to claim 27, further comprising:
a third establishing unit, configured to respectively establish a first corresponding relationship between the first user and the first data flow and a second corresponding relationship between the second user and the first data flow according to the first data flow request message and the second data flow request message.

29. The duplication point device according to claim 28, wherein the third sending unit is specifically configured to send one of the two identical first data flows to the first user according to the first corresponding relationship and send one of the two identical cached data flows to the second user according to the second corresponding relationship;

30. The method according to any one of claim 27 to claim 29, wherein the second data flow request message is received under the condition that no bit of the cached data flow in the duplication point device is discarded.

31. A system for data flow reuse transmission, comprising a duplication point device and a server, wherein
the server is configured to receive a first data flow request message used to request a first data flow for a first user within a preset time period, wherein the preset time period is the period of time between start time and end time, wherein the start time and the end time are comprised, receive a second data flow request message used to request the first data flow for a second user within the preset time period and after receiving the first data flow request message, and send the first data flow to the duplication point device after the current time reaches the end time; and
the duplication point device is configured to duplicate the first data flow, which results in two identical first data flows, and send one of the two identical first data flows to the first user and send the other of the two identical first data flows to the second user.

32. The system according to claim 31, further comprising:
establishing, respectively, by the duplication point device or the server, a first corresponding relationship between the first user and the first data flow and a second corresponding relationship between the second user and the first data flow according to the first data flow request message and the second data flow request message.

33. The system according to claim 32, further comprising:
the duplication point device, specifically configured to send one of the two identical first data flows to the first user and send the other of the two identical first data flows to the second user according to the first corresponding relationship and the second corresponding relationship.

34. A system for data flow reuse transmission, comprising a duplication point device and a server, wherein
the server is configured to receive a first data flow request message used to request a first data flow for a first user within a preset time period, and the preset time period is the period of time between start time and end time, wherein the start time and the end time are comprised, and send the first data flow to the duplication point device according to the first data flow request message;
the duplication point device is configured to send the first data flow to the first user, and duplicate and cache the first data flow;
the server is further configured to receive the second data flow request message used to request the first data flow for a second user within the preset time period; and
the duplication point device is further configured to duplicate the existing part of the first data flow after receiving a notification from the server, wherein the existing part is the part of the first data flow sent to the duplication point device by the server after the second data flow request message is received, send the duplicated existing part to the second user, and send to the second user the first data flow cached before the server receives the second data flow request message.

35. The system according to claim 34, further comprising:
establishing, respectively, by the duplication point device or the server, a first corresponding relationship between the first user and the first data flow and a second corresponding relationship between the second user and the first data flow according to the first data flow request message and the second data flow request message.

36. The system according to claim 35, further comprising:
the duplication point device, specifically configured to send the first data flow to the first user according to the first corresponding relationship, send the duplicated existing part to the second user according to the second corresponding relationship, and send to the second user the first data flow cached before the server receives the second data flow request message.

37. A system for data flow reuse transmission, comprising a duplication point device and a server, wherein
the server is configured to receive a first data flow request message used to request a first data flow from a first user and send the first data flow to a duplication point device according to the first data flow request message;
the duplication point device is configured to duplicate the first data flow, which results in two identical first data flows, and send one of the two identical first data flows to the first user, and caches the other of the two identical first data flows, wherein the cache duration of each bit of the cached data flow is of an identical preset time duration value;
the server is further configured to receive a second data flow request message used to request the first data flow for a second user; and
the duplication point device is further configured to duplicate the cached data flow after receiving a notification from the server, which results in two identical cached data flows, and send one of the two identical cached data flows to the second user.

38. The system according to claim 37, further comprising:
establishing, respectively, by the duplication point device or the server, a first corresponding relationship between the first user and the first data flow and a second corresponding relationship between the second user and the first data flow according to the first data flow request message and the second data flow request message.

39. The system according to claim 38, further comprising:
the duplication point device, specifically configured to send one of the two identical first data flows to the first user according to the first corresponding relationship and send one of the two identical cached data flows to the second user according to the second corresponding relationship.

40. The system according to any one of claim 37 to claim 39, wherein the second data flow request message is received under the condition that no bit of the cached data flow in the duplication point device is discarded.
